# EUROPÄISCHE PATENTSCHRIFT

(11) **EP 0 939 234 B1**
(45) Veröffentlichungstag und Bekanntmachung des Hinweises auf die Patenterteilung: **21.05.2003**
(21) Anmeldenummer: 99100814.5
(22) Anmeldetag: 18.01.1999
(51) Int. Cl.: F16B 5/06, F16B 21/09

(54) **Verbindung zwischen einem Träger und einem Plattenelement**
Connection between a support and a panel
Connexion entre un support et un panneau

(30) Priorität: 25.02.1998 DE 19807953
(43) Veröffentlichungstag der Anmeldung: 01.09.1999
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- EP-A- 0 648 944
- DE-A- 3 921 362
- DE-C- 4 014 589
- US-A- 5 026 016
- US-A- 5 507 610

## Beschreibung

Die Erfindung bezieht sich auf eine Verbindung zwischen einem Träger, insbesondere einem Karosserieteil eines Kraftfahrzeuges, und einem Plattenelement, insbesondere einer Innenverkleidung, mit einem an dem Plattenelement befestigbaren Oberteil, welches mindestens eine Tasche mit Einschubschlitz aufweist und mit einem Halteteil, welches mit mindestens zwei im axialen Abstand voneinander angeordneten Flanschen ausgestattet ist, wobei mindestens ein Flansch quer zur Längsrichtung in die jeweilige Tasche einschiebbar ist, nach dem oberbegriff des Anspruchs 1 bzw. 8.

Als Stand der Technik ist bereits eine derartige Verbindung bekannt (EP 0 726 401 A1), bei welcher das Oberteil aus zwei parallel verlaufenden Taschen besteht, in welche zwei im axialen Abstand voneinander liegende Flansche des Halteteils einschiebbar sind. Der obere Flansch des Halteteils weist einen elastischen mittleren Bereich auf, welcher mit spiralförmig gewundenen Armen versehen ist.

Durch diese besondere Ausführungsform ergibt sich ein guter Toleranzausgleich, und zwar beispielsweise auf dem Kraftfahrzeugsektor, z.B. bei der Anbringung von Türverkleidungen im Kraftfahrzeuginnenraum, welche u.a. erhöhten Temperaturbelastungen ausgesetzt sind. Nachteilig ist bei dieser bekannten Konstruktion die relativ große Bauhöhe durch die beiden Taschen, welche zur Einlagerung der beiden Flansche dienen.

Weiterer Stand der Technik von dem die Erfindung aüsgeht, betrifft die Ausbildung bei einem Werkstück zur Halterung eines weiteren Teils (EP 0 432 855 A1). Hier findet ein flaches Werkstück mit eingestanzter oder taschenartig ausgewölbter Fläche Anwendung, in welches ein weiteres Teil einschiebbar ist. Die Haltewirkung dieser bekannten Konstruktion ist relativ gering, wobei außerdem kein Toleranzausgleich vorgesehen ist.

Ausgehend von dem vorgenannten genannten Stand der Technik besteht die Aufgabe der vorliegenden Erfindung darin, eine Verbindung zu schaffen, welche unter Beibehaltung einer guten Montagemöglichkeit und eines sehr guten Toleranzausgleichs zu einer erheblichen Verminderung in der Bauhöhe der gesamten Verbindung führt.

Diese Aufgabe wird erfindungsgemäß mit den Merkmalen im kennzeichnenden Teil des Ansprüchs 1 bzw. 8 gelöst.

Durch die erfindungsgemäße Konstruktion ergibt sich der Vorteil, dass lediglich eine einzige Tasche vorliegt, wobei nunmehr der Toleranzausgleich nicht über einen Flansch des Halteteils, sondern vorteilhafterweise über die Bodenfläche des Oberteils vorgenommen wird, und zwar durch einen elastischen mittleren Bereich. Hieraus resultiert unter Beibehaltung sämtlicher Vorteile bekannter Konstruktionen eine wesentliche Verringerung der Bauhöhe der erfindungsgemäßen Verbindung.

Nach einer ersten Ausführungsform der Erfindung (Anspruch 1) kann der elastische mittlere Bereich eine Haltezone zum Einlagern des Stirnendes des Halteteils aufweisen, wobei die Haltezone über spiralförmig gewundene Arme mit der Bodenfläche des Oberteils verbunden ist.

Alternativ besteht auch die Möglichkeit, dass nach einer zweiten Bauform (Anspruch 8) der elastische mittlere Bereich gabelförmig ausgebildet ist und zwei mit der Bodenfläche verbundene, spiegelbildlich ausgebildete, elastische Arme aufweist. Diese elastischen Arme können einen konisch zulaufenden Einschubbereich und eine das Stirnende des Halteteils in montierter Lage zumindest teilweise umfassende Auswölbung aufweisen.

Beiden Ausführungsformen ist gemeinsam, dass in weiterer Ausbildung der Erfindung die Bodenfläche rund, oval oder rechteckig ausgebildet und in der Mitte mit dem elastischen Bereich versehen sein kann. Es besteht auch die Möglichkeit, den elastischen Bereich seitenversetzt anzuordnen, d.h. asymmetrisch auszubilden.

In weiterer Ausgestaltung der Erfindung kann die Bodenfläche in der Höhe des Einschubschlitzes der Tasche eine Aussparung und eine zur Haltezone führende Einschubschräge aufweisen, so dass insbesondere bezüglich der ersten Bauform der obere Flansch leicht und einfach in die einzige Tasche des Oberteils eingeschoben werden kann.

Vorzugsweise ist hierbei die Breite der Aussparung auf die Breite bzw. den Durchmesser des Stirnendes des Halteteils abgestellt. Dieses Stirnende kann beispielsweise als Zylinder, als Kugel- oder als Kegelabschnitt oder als Rechteck ausgebildet sein, wobei insbesondere durch die eckige Gestaltung ein Verdrehschutz gewährleistet ist.

Zur Erleichterung der Montage kann in weiterer Ausbildung der Erfindung der Einschubschlitz einen gewölbten Einführungsbereich für einen Verbindungszapfen für die beiden Flansche des Halteteils aufweisen, wobei vorteilhafterweise durch die besondere Gestaltung der erfindungsgemäßen Verbindung größere Toleranzen zulässig sind.

Die Erfindung wird nachfolgend anhand von in der Zeichnung dargestellten Ausfiihrungsbeispielen näher beschrieben. In der Zeichnung zeigen:
- Fig. 1 und 2: jeweils eine perspektivische Ansicht des Oberteils;
- Fig. 3 und 4: zwei verschiedene Ausführungsformen des oberen Bereichs eines Halteteils in Seitenansicht;
- Fig. 5: eine Vorderansicht des Oberteils nach Fig. 1 und 2;
- Fig. 6: einen Schnitt nach der Linie XI-XI nach Fig. 5 mit montiertem Halteteil;
- Fig. 7: eine Draufsicht auf das Oberteil in der Ausbildungsform nach Fig. 1 und 2 und
- Fig. 8: eine weitere Ausführungsform der erfindungsgemäßen Gestaltung des Oberteils in Draufsicht.

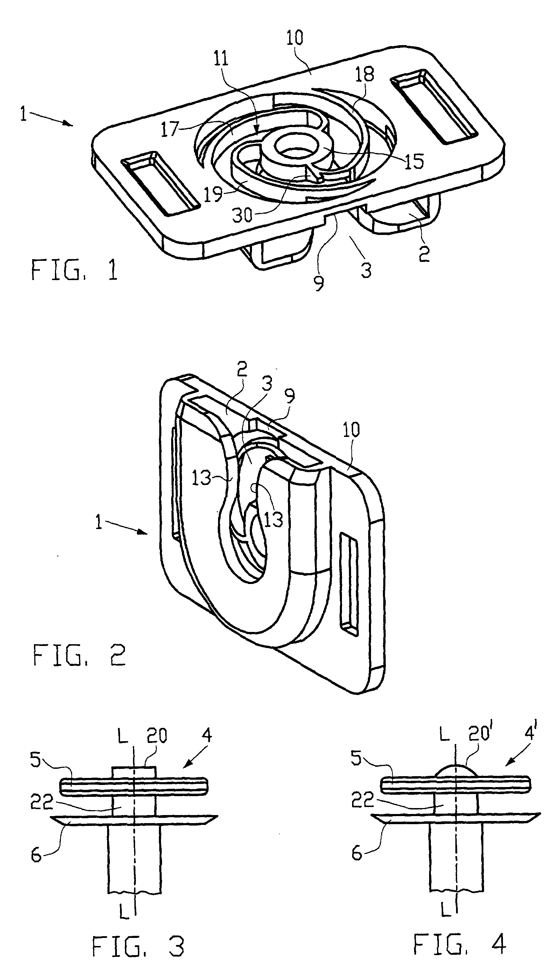

Fig. 1 und 2 zeigen in perspektivischer Ansicht ein Oberteil 1 aus Kunststoff, welches Teil einer Verbindung zwischen einem Träger und einem Plattenelement ist (nicht dargestellt). Eine derartige Verbindung findet sich beispielsweise zwischen einem Karosserieteil und einer Innenverkleidung eines Kraftfahrzeuges.

Das Oberteil 1 weist eine einzige Tasche 2 mit einem Einschubschlitz 3 auf. Die Tasche 2 ist auf ihrer mit dem Plattenelement verbindbaren Bodenfläche 10 nach Fig. 1, 2 und 7 mit einem elastischen mittleren Bereich 11 versehen, welcher in montierter Position formschlüssig mit einem Stirnende 20 bzw. 20' eines in Fig. 3 bzw. 4 dargestellten Halteteils 4 bzw. 4' verbunden ist.

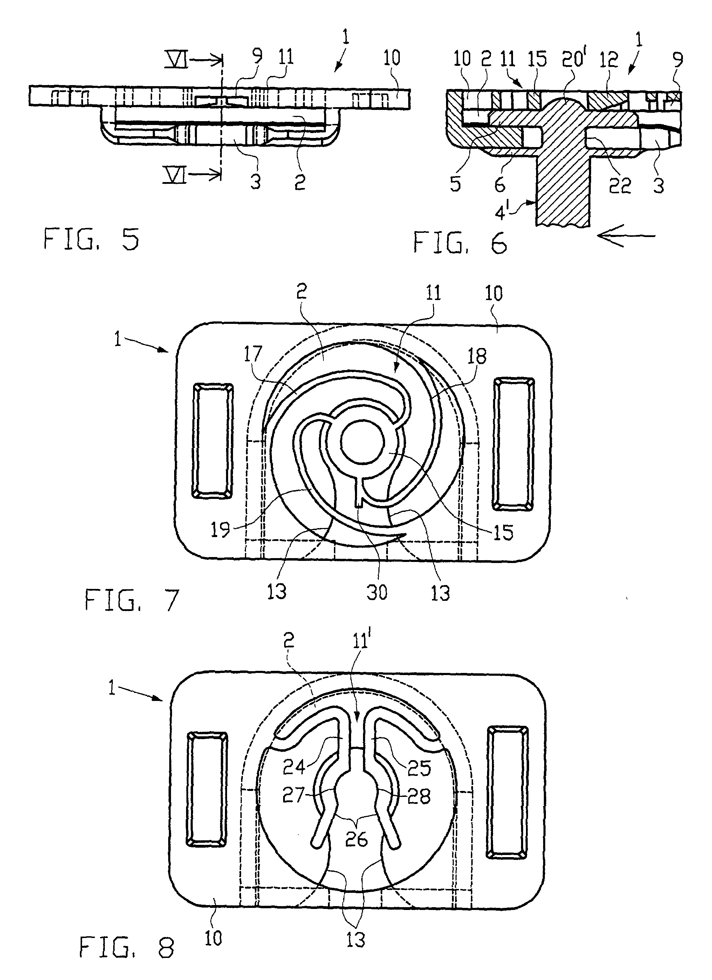

Bei einer ersten Ausführungsform des Oberteils 1 ist der elastische mittlere Bereich 11 mit einer ringförmigen Haltezone 15 versehen, welche zum Einlagern des Stirnendes 20 bzw. 20' des Halteteils 4 bzw. 4' ausgebildet ist. Die Haltezone 15 ist über beispielsweise drei spiralförmig gewundene Arme 17, 18, 19 nach Fig. 7 mit der Bodenfläche 10 des Oberteils 1 verbunden.

Aus Fig. 1 und 2 geht hervor, dass die Bodenfläche 10 in der Höhe des Einschubschlitzes 3 der Tasche 2 eine Aussparung 9 und eine zur Haltezone 15 führende Einschubschräge 12 aufweist. Hierbei ist die Breite der Aussparung 9 auf die Breite bzw. den Durchmesser des Stirnendes 20 bzw. 20' des in Fig. 3 bzw. 4 dargestellten Halteteils 4 bzw. 4' abgestellt.

Bei der ersten Ausführungsform des Oberteils 1 weist der im Bereich des Einschubschlitzes 3 mit der Haltezone 15 verbundene spiralförmig gewundene Arm 18 einen zum Einschubschlitz 3 gerichteten Führungssteg 30 aufweist. Durch diesen Führungssteg 30 wird im Zusammenwirken mit der Ausnehmung 9 und dem gewölbten Einführungsbereich 13 des Oberteils 1 eine gute Führung beim Einschieben des oberen Flansches 5 des Halteteils 4 bzw. 4' in die Tasche 2 des Oberteils 1 gewährleistet.

Dieses vorgenannte Halteteil kann beliebige Bauform aufweisen, wobei jedoch zwingend erforderlich ist, dass zwei im axialen Abstand über einen Verbindungszapfen 22 voneinander getrennte Flansche 5 und 6 vorgesehen sind, wobei der Flansch 5 quer zur Längsrichtung L-L in die Tasche 2 einschiebbar ist und der untere Flansch 6 mögliche unerwünschte Klappergeräusche verhindert.

Oberhalb des Flansches 5 weist das Halteelement 4 bzw. 4' als Stirnende 20 nach Fig. 3 einen Zylinder oder nach Fig. 4 einen Kugelabschnitt 20' auf. Die Breite der Aussparung 9 des Oberteils 1 ist hierbei auf die Breite bzw. den Durchmesser des Stirnendes 20 bzw. 20' des Halteteils 4 bzw. 4' abgestellt.

Aus Fig. 6, welche einen Schnitt nach VI-VI mit Halteteil 4' in Fig. 5 darstellt, ist ersichtlich, dass an die Aussparung 9 eine Einschubschräge 12 anschließt, und zwar im Übergang zum elastischen mittleren Bereich 11. Damit ist es auf einfache Weise möglich, in Pfeilrichtung nach Fig. 6 das Halteteil über den Einschubschlitz 3, welcher einen gewölbten oder schrägen Einführungsbereich 13 aufweist, so einzuschieben, dass sich der obere Flansch 5 in der Tasche 2 einlagert.

In der in Fig. 6 dargestellten Position befindet sich das als Kugelabschnitt ausgebildete Stirnende 20' in der ringförmigen Haltezone 15 des mittleren Bereichs 11, so dass das Halteteil 4 bzw. 4' in montierter Position funktionssicher in dem Oberteil 1 eingelagert ist. Dadurch, dass das Stirnende 20 bzw. 20' des Halteteils in der Haltezone 15 eingelagert ist, welche ihrerseits über die spiralförmig gewundenen Arme mit der Bodenfläche des Oberteils verbunden ist, kann das Halteteil in verschiedenen Ebenen bei Überschreitung üblicher Toleranzen eine versetzte Position ermöglichen, so dass insgesamt ein guter Toleranzausgleich geschaffen wird.

Es ergibt sich insgesamt eine sehr niedrige Bauform des Oberteils 1, da lediglich eine einzige Tasche 2 vorliegt. Darüber hinaus werden unerwünschte Klappergeräusche vermieden, da der untere Flansch 6 elastisch ausgebildet ist und die Außenseite der Tasche 2 beaufschlagt.

Bei der in Fig. 8 dargestellten Ausführungsform ist der elastische mittlere Bereich 11' gabelförmig ausgebildet und weist zwei mit der Bodenfläche 10 verbundene, spiegelbildlich ausgebildete, elastische Arme 24 und 25 auf. Diese elastischen Arme 24 und 25 besitzen jeweils einen konisch zulaufenden Einschubbereich 26 und eine das Stirnende 20 bzw. 20' des Halteteils 4 bzw. 4' in montierter Lage zumindest teilweise umfassende Auswölbung 27 und 28, welche eine Funktion analog der Haltezone 15 der ersten Ausführungsform des Oberteils nach Fig. 7 hat. Wiederum weist der Einschubschlitz einen gewölbten Einführungsbereich 13 für den Verbindungszapfen 22 zwischen den beiden Flanschen 5 und 6 des Halteteils 4 bzw. 4' auf.

Durch die besondere Gestaltung der erfindungsgemäßen Verbindung mit einem Oberteil 1 mit einer einzigen Tasche 2 und dem elastischen mittleren Bereich 11 bzw. 11' ergibt sich im Zusammenwirken mit dem Halteteil 4 bzw. 4' und den beiden Flanschen 5 und 6 bei extrem niedriger Bauhöhe der gesamten Einheit ein sehr guter Toleranzausgleich in verschiedenen Ebenen.

Das Halteteil kann beliebig ausgebildet sein, z.B. mit einem Hohlschaft oder Rastelementen, wobei jedoch die beiden Flansche 5 und 6 zur Funktionsfähigkeit der Verbindung erforderlich sind.

## Patentansprüche

1. Verbindung zwischen einem Träger, insbesondere einem Karosserieteil eines Kraftfahrzeuges und einem Plattenelement, insbesondere einer Innenverkleidung, mit einem an dem Plattenelement befestigbaren Oberteil (1), welches mindestens eine Tasche (2) mit einem Einschubschlitz (3) aufweist und mit einem Halteteil (4, 4'), welches mit mindestens zwei im axialen Abstand von einander angeordneten Flanschen (5, 6) ausgestattet ist, wobei mindestens ein Flansch (5) quer zur Längsrichtung (L-L) in die jeweilige Tasche (2) einschiebbar ist und wobei die Bodenfläche des Oberteils (1) einen elastischen, mittleren Bereich (11, 11') besitzt, welcher formschlüssig mit dem Halterteil (4, 4') verbunden ist,
**dadurch gekennzeichnet,**
**dass** der elastische, mittlere Bereich (11) einer Haltezone (15) zum Einlagern des Stirnendes (20, 20') des Halteteils (4, 4') aufweist, wobei die Haltezone (15) über spiralförmig gewundene Arme (17, 18, 19) mit der Bodenfläche (10) des Oberteils (1) verbunden ist und
**dass** in die ringförmig ausgebildete Haltezone (15) das Stirnende (20, 20') des Halteteils (4, 4') einlagerbar ist.

2. Verbindung nach Anspruch 1, **dadurch gekennzeichnet, dass** die Bodenfläche (10) in der Höhe des Einschubschlitzes (3) der Tasche (2) eine Aussparung (9) und eine zur Haltezone (15) führende Einschubschräge (12) aufweist.

3. Verbindung nach Anspruch 2, **dadurch gekennzeichnet, dass** ein im Bereich des Einschubschlitzes (3) mit der Haltezone (15) verbundener spiralförmig gewundener Arm (18) einem zum Einschubschlitz (3) gerichteten Führungssteg (30) ausweist.

4. Verbindung nach Anspruch 2, **dadurch gekennzeichnet, dass** die Breite der Aussparung (9) auf die Breite bzw. auf den Durchmesser des Stirnendes (20, 20') des Halteteils (4, 4') abgestellt ist.

5. Verbindung nach Anspruch 4, **dadurch gekennzeichnet, dass** das Stirnende (20, 20') des Halteteils (4, 4') als Zylinder, als Kugel- oder als Kegelabschnitt oder als Rechteck ausgebildet ist.

6. Verbindung nach Anspruch 1 und 5, **dadurch gekennzeichnet, dass** der untere Flansch (6) des Halteteils (4, 4') als elastisches Abdichtelement in montierter Position die Außenseite der Tasche (2) des Oberteils (1) beaufschlagt.

7. Verbindung nach einem oder mehreren der vorhergehenden Ansprüche, **dadurch gekennzeichnet, dass** der Einschubschlitz (3) einen gewölbten Einführungsbereich (13) für einen Verbindungszapfen (22) für die beiden Flansche (5, 6) des Halteteils (4, 4') aufweist.

8. Verbindung zwischen einem Träger, insbesondere einem Karoserieteil eines Fahrzeuges und einem Plattenelement, insbesondere einer Innenverkleidung mit einem an dem Plattenelement befestigbaren Oberteil (1), welches mindestens eine Tasche (2) mit Einschubschlitz (3) aufweist und mit einem Halteteil (4, 4'), welches mit mindestens zwei im axialen Abstand von einander angeordneten Flanschen (5, 6) ausgestattet ist, wobei mindestens ein Flansch (5) quer zur Längsrichtung (L-L) in die jeweilige Tasche (2) einschiebbar ist und wobei die Bodenfläche des Oberteils (1) einen elastischen, mittleren Bereich (11, 11') besitzt, welcher formschlüssig mit dem Halteteil (4, 4') verbunden ist,
**dadurch gekennzeichnet,**
**dass** der mittlere, elastische Bereich (11, 11') gabelförmig ausgebildet ist und zwei mit der Bodenfläche (10) verbundene spiegelbildliche elastische Arme (24, 25) aufweist.

9. Verbindung nach Anspruch 8, **dadurch gekennzeichnet, dass** die elastischen Arme (24, 25) einen konisch zulaufenden Einschubbereich (26) und eine das Strinende (20, 20') des Halteteils (4, 4') in montierter Lage zumindest teilweise umfassender Auswölbung (27, 28) aufweisen.

10. Verbindungen nach einem oder mehreren der vorhergehenden Ansprüche, **dadurch gekennzeichnet, dass** die Bodenfläche (10) rund, oval, oder rechteckig ausgebildet und in der Mitte mit dem elastischen Bereich (11, 11') versehen ist.

## Claims

1. Connection between a support, in particular a body part of a motor vehicle, and a panel element, in particular an inner trim panel, having an upper part (1) which can be fastened to the panel element and has at least one pocket (2) with an insertion slot (3), and having a retaining part (4, 4') which is provided with at least two flanges (5, 6) arranged at an axial distance from each other, it being possible for at least one flange (5) to be inserted transversely with respect to the longitudinal direction (L-L) into the respective pocket (2), and the bottom surface of the upper part (1) having an elastic, central region (11, 11') which is connected in a form-fitting manner to the retaining part (4, 4'), **characterized in that** the elastic, central region (11) has a retaining zone (15) for the embedding of the front end (20, 20') of the retaining part (4, 4'), the retaining zone (15) being connected to the bottom surface (10) of the upper part (1) via spirally coiled arms (17, 18, 19), and **in that** the front end (20, 20') of the retaining part (4, 4') can be embedded in the annularly designed retaining zone (15).

2. Connection according to Claim 1, **characterized in that** the bottom surface (10) has a cutout (9) level with the insertion slot (3) of the pocket (2) and an insertion slope (12) leading to the retaining zone (15).

3. Connection according to Claim 2, **characterized in that** a spirally coiled arm (18), which is connected to the retaining zone (15) in the region of the insertion slot (3), points towards a guide web (30) directed towards the insertion slot (3).

4. Connection according to Claim 2, **characterized in that** the width of the cutout (9) is matched to the width or to the diameter of the front end (20, 20') of the retaining part (4, 4').

5. Connection according to Claim 4, **characterized in that** the front end (20, 20') of the retaining part (4, 4') is designed as a cylinder, as a spherical or conical section or as a rectangle.

6. Connection according to Claims 1 and 5, **characterized in that** the lower flange (6) of the retaining part (4, 4') acts upon the outside of the pocket (2) of the upper part (1) in the fitted position as an elastic sealing element.

7. Connection according to one or more of the preceding claims, **characterized in that** the insertion slot (3) has a curved introductory region (13) for a connecting pin (22) for the two flanges (5, 6) of the retaining part (4, 4').

8. Connection between a support, in particular a body part of a vehicle, and a panel element, in particular an inner trim panel, having an upper part (1) which can be fastened to the panel element and has at least one pocket (2) with an insertion slot (3), and having a retaining part (4, 4') which is provided with at least two flanges (5, 6) arranged at an axial distance from each other, it being possible for at least one flange (5) to be inserted transversely with respect to the longitudinal direction (L-L) into the respective pocket (2), and the bottom surface of the upper part (1) having an elastic, central region (11, 11') which is connected in a form-fitting manner to the retaining part (4, 4'), **characterized in that** the central, elastic region (11, 11') is of fork-shaped design and has two mirror-inverted, elastic arms (24, 25) connected to the bottom surface (10).

9. Connection according to Claim 8, **characterized in that** the elastic arms (24, 25) have a conically tapering insertion region (26) and a convexity (27, 28) which at least partially surrounds the front end (20, 20') of the retaining part (4, 4') in the fitted position.

10. Connection according to one or more of the preceding claims, **characterized in that** the bottom surface (10) is of round, oval or rectangular design and is provided with the elastic region (11, 11') in the centre.

## Revendications

1. Liaison entre un support, en particulier une partie de carrosserie d'un véhicule automobile et un panneau, en particulier un habillage intérieur, avec une partie supérieure (1) qui peut être fixée au panneau et qui présente au moins une poche (2) avec une fente d'insertion (3) et une partie de retenue (4, 4') qui est équipée d'au moins deux brides (5, 6) disposées à distance axiale l'une de l'autre, au moins une bride (5) pouvant être introduite transversalement à la direction longitudinale (L-L) dans la poche (2) correspondante et le fond de la partie supérieure (1) possédant une zone intermédiaire élastique (11, 11') qui est liée par engagement positif avec la partie de retenue (4, 4'),
**caractérisée par le fait que**
la zone intermédiaire élastique (11) présente une zone de retenue (15) propre à la réception de l'extrémité avant (20, 20') de la partie de retenue (4, 4'), la zone de retenue (15) étant reliée, par l'intermédiaire de bras en spirale (17,18,19), au fond (10) de la partie supérieure (1) et
l'extrémité avant (20,20') de la zone de retenue (4, 4') peut être introduite dans la zone de retenue (15) de forme annulaire.

2. Liaison selon la revendication 1, **caractérisée par le fait que** le fond (10) à hauteur de la fente d'insertion (3) de la poche (2) présente une échancrure (9) et un biseau d'insertion (12) menant vers la zone de retenue (15).

3. Liaison selon la revendication 2, **caractérisée par le fait qu'**un bras (18) incurvé en spirale et raccordé à la zone de retenue (15) dans la région de la fente d'insertion (3) présente une rainure de guidage (30) dirigée vers la fente d'insertion (3).

4. Liaison selon la revendication 2, **caractérisée par le fait que** la largeur de l'échancrure (9) est adaptée à la largeur ou au diamètre de l'extrémité avant (20, 20') de la partie de retenue (4,4').

5. Liaison selon la revendication 4, **caractérisée par le fait que** l'extrémité avant (20,20') de la partie de retenue (4, 4') est constituée sous forme d'un cylindre, d'une calotte sphérique, d'un tronçon conique ou d'un rectangle.

6. Liaison selon la revendication 1 et 5, **caractérisée par le fait que** la bride inférieure (6) de la partie de retenue (4, 4') s'applique, en position de montage, contre le côté extérieur de la poche (2) de la partie supérieure (1) en tant qu'élément d'étanchéité élastique.

7. Liaison selon une ou plusieurs des revendications précédentes, **caractérisée par le fait que** la fente d'insertion (3) présente une zone d'introduction cintrée (13) pour un picot de liaison (22) pour les deux brides (5, 6) de la partie de retenue (4, 4').

8. Liaison entre un support, en particulier une partie de carrosserie d'un véhicule automobile et un panneau, en particulier un habillage intérieur avec une partie supérieure (1) qui peut être fixée au panneau et qui comporte au moins une poche (2) avec une fente d'insertion (3) et une partie de retenue (4, 4') qui est équipée d'au moins deux brides (5, 6) disposées à distance axiale l'une de l'autre, au moins une bride (5) pouvant être introduite transversalement à la direction longitudinale (L-L) dans la poche (2) correspondante et le fond de la partie supérieure (1) possédant une zone intermédiaire élastique (11, 11') qui est liée par engagement positif avec la partie de retenue (4, 4'),
**caractérisée par le fait**
**que** la zone intermédiaire élastique (11, 11') est constituée sous forme fourchue et présente deux bras élastiques (24, 25) inversés et reliés avec le fond (10).

9. Liaison selon la revendication 8, **caractérisée par le fait que** les bras élastiques (24, 25) présentent une région d'insertion (26) conique et un évidement cintré (27, 28) entourant au moins partiellement, en position de montage, l'extrémité avant (20, 20') de la partie de retenue (4, 4').

10. Liaison selon une ou plusieurs des revendications précédentes, **caractérisée par le fait que** le fond (10) est rond, ovale ou rectangulaire et possède en son milieu une zone élastique (11, 11').
